(19) Europäisches Patentamt
European Patent Office
Office européen des brevets

(11) EP 0 945 469 B1

(12) **EUROPÄISCHE PATENTSCHRIFT**

(45) Veröffentlichungstag und Bekanntmachung des Hinweises auf die Patenterteilung:
**05.11.2003 Patentblatt 2003/45**

(51) Int Cl.7: **C08F 4/40**

(21) Anmeldenummer: **99105281.2**

(22) Anmeldetag: **15.03.1999**

(54) **Verfahren zur Herstellung von Telechelen, so hergestellte Telechele und ihre Verwendung**

Process for preparing telechelic polymers, also prepared telechelic polymers and their use

Procédé de préparation de polymères téléchéliques, polymères téléchéliques ainsi préparés et leur usage

(84) Benannte Vertragsstaaten:
**AT BE CH DE ES FR GB IT LI NL SE**

(30) Priorität: **26.03.1998 DE 19813353**

(43) Veröffentlichungstag der Anmeldung:
**29.09.1999 Patentblatt 1999/39**

(73) Patentinhaber: **BAYER AG**
**51368 Leverkusen (DE)**

(72) Erfinder:
- **Melchiors, Martin Dr.**
**51373 Leverkusen (DE)**
- **Margotte, Dieter Dr.**
**47807 Krefeld (DE)**
- **Höcker, Hartwig Prof.Dr.**
**52076 Aachen (DE)**
- **Keul, Helmut Dr.**
**52074 Aachen (DE)**
- **Neumann, Andreas**
**52072 Aachen (DE)**

(56) Entgegenhaltungen:
**WO-A-94/11412** **WO-A-96/30421**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 945 469 B1

## Beschreibung

Die Erfindung betrifft ein neues Verfahren zur Herstellung von oligomeren und polymeren Telechelen, die so hergestellten Telechele sowie ihre Verwendung im Kunststoff-, Faser- oder Lackbereich.

Als Telechele werden im allgemeinen lineare Oligomere oder niedermolekulare lineare Polymere mit funktionellen Gruppen an beiden Kettenenden bezeichnet; eine umfassende Übersicht über die Herstellung von Telechelen findet man z.B. in *Adv. Polym. Sci. 81, 168 (1987)*. Sie haben u. a. Bedeutung als Additive und als Bausteine (Prepolymere) für Copolymere definierter Struktur (z.B. Blockcopolymere, Kammpolymere, Sternpolymere) erlangt. Insbesondere für die Verwendung von Telechelen als Baustein für Copolymere ist eine möglichst exakte Bifunktionalität notwendig.

Die bekanntesten Reaktionen zur Herstellung von Telechelen, die eine exakte Funktionalität von 2 aufweisen, sind Polyadditionsreaktionen (z.B. zu Polyurethanen, Polyharnstoffen), Polykondensationen (z.B. zu Polyestern, Polycarbonaten, Polyamiden) sowie ringöffnende anionische oder kationische Polymerisationen von heterocyclischen Monomeren (z.B. cyclische Ester, Carbonate, Acetale oder Ether), ggf. mit Abbruchreagenzien, die die gewünschten funktionellen Gruppen enthalten.

Für eine Verwendung in der Lackindustrie sind telechele Polyacrylate, d.h. niedermolekulare Acrylatcopolymere mit 2 definierten funktionellen Endgruppen, die an den üblicherweise in der Lackchemie verwendeten Vernetzungs-, Kettenverlängerungs- und/oder Kopplungsreaktionen teilnehmen können, von großem Interesse.

Mit keinem der oben beschriebenen Verfahren zur Herstellung von Telechelen lassen sich jedoch telechele Polyacrylate herstellen.

In der Polymerchemie sind verschiedene Methoden bekannt, um in Polyvinyl- oder Polyacrylatverbindungen funktionelle Endgruppen einzubauen, z.B. oxidative Kettenspaltungen (z.B. mit Sauerstoff, Ozon sowie Osmium- oder Rutheniumtetroxid). Diese verlaufen jedoch unspezifisch und/oder setzen Doppelbindungen in den Polymerketten als Angriffspunkt der Spaltung voraus. Eine exakte Bifunktionalität läßt sich so kaum erreichen.

Setzt man in eine radikalische Polymerisation einen auf die Funktionalität 2 berechneten Anteil Monomere, die die gewünschte funktionelle Gruppe tragen, zu, so erhält man ein Produktgemisch mit einer mittleren Funktionalität von 2, in dem bifunktionelle Moleküle neben tri- und höherfunktionellen, monofunktionellen aber auch nichtfunktionellen Polymermolekülen vorliegen.

Werden anstelle der funktionelle Gruppen tragenden Monomere Initiatoren und/oder Abbruchreagenzien eingesetzt, die die gewünschten funktionellen Gruppen tragen (z.B. funktionalisierte Diazoverbindungen, funktionalisierte Peroxide oder Redoxinitiatoren), so wird eine Funktionalität von 2 im allgemeinen deshalb nicht erreicht, weil verschiedene Abbruchreaktionen nebeneinander stattfinden, z.B. Disproportionierung, Rekombination, Abbruch durch Initiatorradikale oder Abbruch durch das Abbruchreagenz.

Bei der sog. "Dead end - Polymerisation" setzt man einen großen Überschuß eines die gewünschte Endgruppe tragenden Initiators ein. So kann jede Polymerkette mit einem Initiatormolekül abgebrochen werden und ist somit bifunktionell. Allerdings werden nur Polymere mit sehr niedrigen Molekulargewichten aufgebaut und es werden große Mengen Initiator benötigt

Bei der Telomerisation (d.h. Polymerisation von Vinyl- oder Acrylatmonomeren in Gegenwart von Kettenübertragungsreagenzien mit hohen Kettenübertragungskonstanten) erreicht man ebenfalls nur geringe Molekulargewichte, und die Anwendung bleibt auf wenige Fälle beschränkt (z.B. Polymerisation in Gegenwart von Tetrachlorkohlenstoff, Dibrommethan oder funktionelle Gruppen tragenden Disulfiden). Da sich die Disproportionierung als Abbruchreaktion zwischen zwei aktiven Kettenenden nicht ganz unterdrücken läßt, findet man Funktionalitäten der Telechele kleiner 2. Zumindest im Falle der Halogenverbindungen ist auch eine nachträgliche polymeranaloge Umsetzung der Halogensubstituenten zu den gewünschten funktionellen Gruppen notwendig.

Telechele Polymethacrylate können durch Gruppentransferpolymerisation mit Ketensilylacetalen hergestellt werden, wobei die funktionellen Endgruppen durch Umwandlung der Silylgruppen gebildet werden. Nachteilig sind hier aber die hohen Reinheitsanforderungen an Monomer und Lösemittel sowie Preis und Verfügbarkeit der benötigten Initiatoren, wodurch ein solches Verfahren nur für Spezialanwendungen anwendbar wäre.

Aus den EP-A 613910, EP-A 622378 ist bekannt, $\alpha,\omega$-Polymethacrylatdiole durch selektive Umesterung der terminalen Estergruppe eines $\alpha$-hydroxyfunktionellen Polyalkylmethacrylats herzustellen. Dieses Verfahren weist mehrere Nachteile auf. Zum einen stellt man das $\alpha$-hydroxyfunktionelle Polyalkylmethacrylat durch radikalische Polymerisation in Gegenwart großer Mengen Mercaptoethanol her, was mit erheblicher Geruchsbelästigung verbunden ist. Zum anderen handelt es sich um einen mehrstufigen, energie- und zeitaufwendigen Prozeß, der das Abdestillieren des Überschusses Mercaptoethanol und des verwendeten Lösemittels, die Umesterung mit einem Überschuß eines Diols in Gegenwart eines Katalysators, die destillative Entfernung des Methanols, mehrmaliges Waschen des Produkts zur Entfernung des Katalysators und des überschüssigen Diols sowie noch weitere Reinigungsstufen umfaßt. Außerdem bleibt diese Reaktion auf die ausschließliche Verwendung von Alkylmethacrylaten beschränkt, da sonst die Umesterungsreaktion nicht mehr ausreichend selektiv an der terminalen Estergruppe der Kette abläuft.

Einen Spezialfall ohne Anwendungsbreite und wirtschaftliches Potential stellt auch die ringöffnende Polymerisation ungesättigter Heterocyclen dar (z.B. cyclische Ketenacetale, ungesättigte Spiroorthocarbonate); solche Monomere sind technisch nicht verfügbar.

Somit ist keine der bisher aufgeführten Methoden zur Herstellung der gewünschten telechelen Polyacrylate geeignet, da entweder die angestrebte Funktionalität nicht erreicht wird, die Methode nur auf einige wenige Spezialfälle beschränkt bleibt und/oder polymeranaloge Nachreaktionen erforderlich sind. Es ist ein Polymerisationsverfahren erforderlich, das bei einfacher Durchführbarkeit eine gute Kontrolle der Polymerisation und insbesondere der Endgruppen der Polymerketten ermöglicht. Ein solches Verfahren ist die lebende radikalische Polymerisation.

Die lebende radikalische Polymerisation stellt eine neuere Methode der kontrollierten radikalischen Polymerisation dar. Sie verbindet die Vorteile einer konventionellen radikalischen Polymerisation (einfaches Herstellverfahren, kostengünstig, breite Monomerbasis) mit denen einer lebenden Polymerisation (Polymere mit definiertem Aufbau, Molekulargewicht und -verteilung und Endgruppenfunktionalität). Das Ziel einer genauen Kontrolle der radikalischen Polymerisation wird hier durch einen reversiblen Kettenabbruch/Blockierung ("end-capping") nach jedem Wachstumsschritt erreicht. Die Gleichgewichtskonzentration der polymerisationsaktiven Kettenenden ist dabei im Vergleich zur Gleichgewichtskonzentration der blockierten ("dormant") Kettenenden so gering, daß Abbruch- und Übertragungsreaktionen gegenüber der Wachstumsreaktion stark zurückgedrängt sind. Da das end-capping reversibel abläuft, bleiben alle Kettenenden "lebend", sofern kein Abbruchreagenz vorhanden ist Dies ermöglicht die Kontrolle des Molekulargewichts, eine enge Molekulargewichtsverteilung und gezielte Funktionalisierung der Kettenenden durch Abbruchreagenzien.

Erste Ansätze für eine kontrollierte radikalische Polymerisation (nach der Iniferter-Methode) sind z.B. in Makromol. Chem., Rapid Commun. 3 (1982), 127 und 132 beschrieben. Iniferter bezeichnen dabei eine Klasse von Radikalinitiatoren, die *Ini*tierungs-, Übertragungs- (trans*fer*-) und reversible Abbruchreaktionen (*ter*mination) eingehen können, z.B. Teraalkylthiuramdisulfide, die photolytisch gespalten und aktiviert werden. So können z.B. Polymere mit Dithiocarbamat-Endgruppen, die durch Bestrahlung wieder aktiviert werden können, hergestellt werden.

Aus der US-A 4 581 429 ist das Prinzip des reversiblen Kettenabbruchs durch die Verwendung von Radikalen auf Basis von linearen oder cyclischen Nitroxiden, wie z.B. Tetramethyl-1-piperidinyloxy (TEMPO) bekannt. Setzt man dieses Nitroxid mit einem reaktiven Kohlenstoffradikal um, das eine radikalische Vinylpolymerisation starten kann, so bildet sich eine reversibel spaltbare C-O-Bindung, die bei mäßigem Erhitzen eine Polymerisation durch Insertion von Vinylmonomeren zwischen Nitroxid- und Kohlenstoffradikal bewirken kann. Nach jeder Monomeranlagerung wird das neu entstehende Radikal vom Nitroxid "abgefangen"; dieses reversibel blockierte Kettenende kann anschließend weitere Monomermoleküle einschieben. Funktionelle Endgruppen werden ebenfalls beschrieben und hier durch polymeranaloge Umwandlung der TEMPO-Endgruppen erreicht.

Dieses Konzept des reversiblen Abbruchs mit Nitroxiden ist z.B. in J.Am.Chem.Soc. 116, 11185 (1994); Macromolecules 28, 2993 (1995) US-A 5 322 912, US-A 5 401 804, US-A 5 412 047, US-A 5 449 724, WO 94/11412, WO 95/26987, WO 95/31484 zu einer praxistauglichen Polymerisationsmethode ausgebaut worden. Hierbei wird eine Kombination aus Dibenzoylperoxid (BPO) und TEMPO als Startersystem eingesetzt.

Einen anderen Lösungsweg bietet die ***"A**tom **T**ransfer **R**adical **P**olymerization"* (ATRP), bei der eine Übergangsmetall-Komplerxverbindung $ML_x$ ein übertragbares Atom oder Atomgruppe X (z.B. Cl, Br) aus einer organischen Verbindung RX abstrahiert unter Bildung einer oxidierten Komplexverbindung $ML_xX$ und eines organischen Radikals R•, das sich an ein Vinylmonomer Y unter Bildung des Kohlenstoffradikals RY• addiert Dieses Radikal kann mit der oxidierten Komplexverbindung unter Übertragung von X zu RYX und $ML_x$ abreagieren, welches eine neue ATRP und damit einen weiteren Wachstumsschritt auslösen kann. Die polymerisationsaktive Spezies RY• ist somit durch die abstrahierbare Gruppe X mit Hilfe der Übergangsmetallverbindung, die den Redoxprozeß ermöglicht, reversibel blokkiert (z.B. Macromolecules 28, 1721 (1995); Macromolecules 29, 1070 (1996), Macromolecules 28, 7970 (1995), WO 95/25765) und WO 96/30421, WO 97/18247.

Es war nun Aufgabe der Erfindung, ein Verfahren zu finden, bei dem in einem Reaktionsschritt ein Homooder Copolymer aus einem oder mehreren Vinylmonomeren, insbesondere Acrylatmonomeren und Styrol, mit gezielt eingestelltem Molekulargewicht und enger Molekulargewichtsverteilung hergestellt werden kann. Die hergestellten Polymere tragen zwei funktionelle Endgruppen, die zu einer weiteren Umsetzung oder Vernetzung mit in der Lackchemie gebräuchlichen funktionellen Gruppen fähig sind.

Diese Aufgabe konnte durch ein Verfahren, mit dem durch eine radikalische (Co)polymerisation olefinisch ungesättigter Monomere nach der Methode der lebenden radikalischen Polymerisation mit einem Initiatorsystem, das ggf. eine der gewünschten funktionellen Gruppen enthält, in Gegenwart eines Funktionalisierungsreagenzes, das die gewünschte funktionelle Gruppe trägt und nach Verbrauch der Monomere die Ketten abbricht, gezielt Telechele hergestellt werden können, gelöst werden.

Die vorliegende Erfindung betrifft also ein Verfahren zur Herstellung von oligomeren und polymeren Telechelen der Formel

$$Y^1\text{-}Q\text{-}Y^2,$$

wobei Q einen oligomeren, gegebenenfalls substituierten Kohlenwasserstoffrest mit einem Molekulargewicht 300<Q<10 000 der Formel

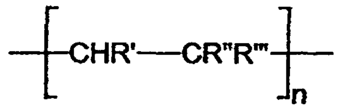

darstellt,
worin n eine ganze Zahl im Bereich $3 \leq n \leq 500$ ist und R', R'', R''' unabhängig voneinander H, $C_1$-$C_{20}$-(Cyclo)alkyl, $C_6$-$C_{24}$-Aryl, Halogen, CN, $C_1$-$C_{20}$-Alkylester oder -amid, $C_6$-$C_{24}$-Arylester oder -amid sein können, wobei R', R'', R''' auch weitere funktionelle Gruppen wie z.B. Aldehyd-, Keto- oder Ethergruppen enthalten können und R' und R'' auch Bestandteile eines Rings, z.B. bei einem cyclischen Anhydrid, cyclischen Imid oder cyclischen Alkan sein können und die funktionellen Gruppen $Y^1$, $Y^2$ mit Isocyanaten, Alkoholen, Carbonsäuren oder Epoxiden reaktionsfähige funktionelle Gruppen darstellen und gleich oder verschieden sein können, durch Polymerisation von:

A) radikalisch polymerisierbaren, ethylenisch ungesättigten Monomeren der Formel

$$R'HC{=}CR''R''' ,$$

worin R', R'', R''' die oben angegebene Bedeutung haben und keine der funktionellen Gruppen $Y^1$, $Y^2$ beinhalten, oder einem Gemisch solcher Monomere
mit
B) einer Initiatorverbindung $R^1R^2R^3C$-X, die ein oder mehrere radikalisch abstrahierbare oder übertragbare Atome oder Atomgruppen X enthält, worin $R^1$ entweder X oder einen linearen oder verzweigten Alkylrest, der entweder mit X oder mit $Y^1$ und ggf. weiteren Resten substituiert ist, darstellt und $R^2$, $R^3$ unabhängig voneinander Wasserstoff oder ggf. substituierte, lineare oder verzweigte aliphatische oder aromatische Kohlenwasserstoffreste oder elektronenziehende Substituenten wie z.B. COOR, CN, $NO_2$, COCl, CONHR, $CONR_2$ oder COR darstellen,
und C) einer Übergangsmetallverbindung $M_pZ_q$, die aus einem Kation eines Metalls M aus der Gruppe Cu, Fe, Ru, Cr, Mo, Wo, Mn, Rh, Re, Co, Ni, V, Zn, Au, Ag oder Sm, wobei M in der Übergangsmetallverbindung in verschiedenen Oxidationsstufen auftreten und an einem reversiblen Redoxprozeß teilnehmen kann, und einem Anion Z aus der Gruppe Halogenid, Hydroxid, $C_1$-$C_6$-Alkoxy, $SO_4^{2-}$, $PO_4^{3-}$, $R^4PO_4^{2-}$, $R^4R^5PO_4^-$, $R^3R^4R^5P$-, $CF_3COO$-, $PF_6^-$, $CH_3SO_3^-$, $ArSO_3^-$, $CN^-$ oder $R^4COO^-$, wobei $R^4$, $R^5$ unabhängig voneinander Wasserstoff oder einen ggf. aryl- oder halogensubstituierten Alkylrest darstellen, und wobei sich p und q aus den Wertigkeiten von M und Z in der Übergangsmetallverbindung ergeben, aufgebaut ist,
und
D) einem ein- oder mehrzähnigen Komplexliganden L, der ein oder mehrere Stickstoff-, Sauerstoff- Schwefel- oder Phosphoratome enthält und der mit mindestens einem Kation des Metalls M Komplexe eingehen kann,
dadurch gekennzeichnet, daß die Komponenten A) - D) in Gegenwart von
E) einer Verbindung ausgewählt aus der Gruppe

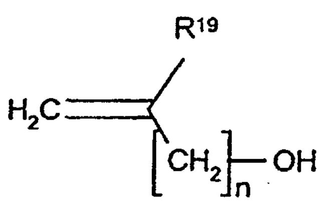

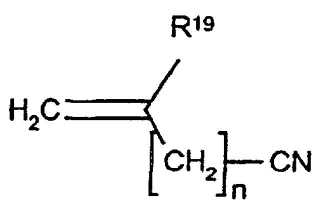

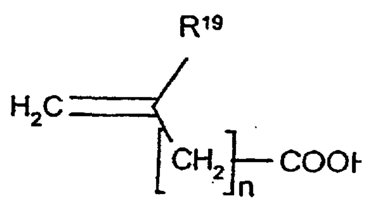

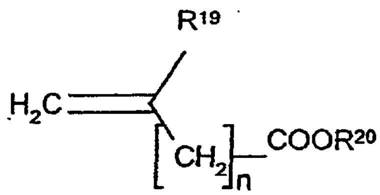
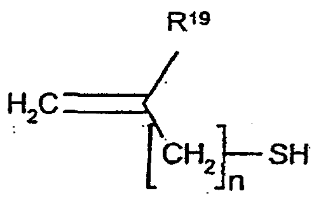
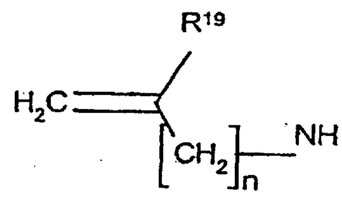

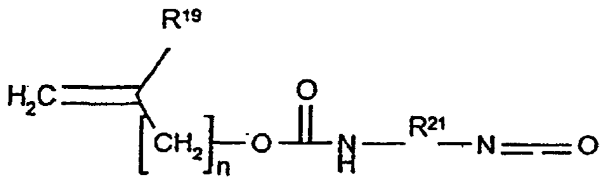
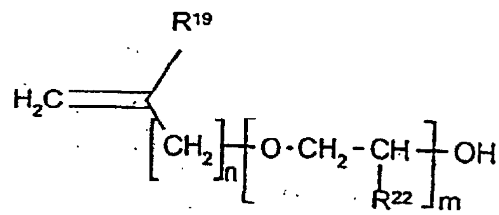

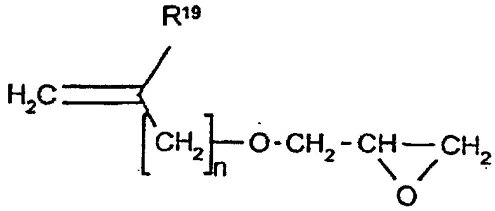

wobei $R^{19}$ Wasserstoff oder eine lineare oder verzweigte $C_1$-$C_6$-Alkylkette und $R^{20}$ und $R^{21}$ beliebige Kohlenwasserstoffreste darstellen, $R^{22}$ Wasserstoff oder ein Alkylrest, bevorzugt Methyl ist, n = 1 - 4 und m = 1 - 10 ist, in einer lebenden radikalischen Polymerisation zum Telechel $Y^1$-Q-$Y^2$ umgesetzt werden.

Gegenstand der Erfindung sind auch die nach dem erfindungsgemäßen Verfahren erhältlichen Telechele.

Gegenstand der Erfindung ist auch die Verwendung der erfindungsgemäßen Telechele als Baustein für Kunststoffe, Klebstoffe oder Fasern sowie als Bindemittel, Bindemittelkomponente oder Baustein für Bindemittelkomponenten in Beschichtungsmitteln und Klebstoffen.

Bevorzugt ist ein Verfahren zur Herstellung von oligomeren oder polymeren Telechelen $Y^1$-Q-$Y^2$ des Molekulargewichts $500 < M_n < 10000$, worin Q für einen oligomeren oder polymeren, ggf. substituierten Kohlenwasserstoffrest obiger Definition mit einem Molekulargewicht 300 < Q < 10 000 steht und $Y^1$, $Y^2$ gleich oder verschieden sein können und mit Isocyanaten, Alkoholen, Carbonsäuren oder Epoxiden reaktionsfähige funktionelle Gruppen darstellen, durch Polymerisation von

A) radikalisch polymerisierbaren ethylenisch ungesättigten Monomeren der Formel

$$R'HC=CR''R''' ,$$

worin R', R", R"' die oben angegebene Bedeutung haben und keine der funktionellen Gruppen $Y_1$, $Y_2$ beinhalten, oder einem Gemisch solcher Monomere, die keine Gruppen $Y^1$ oder $Y^2$ im Molekül enthalten, oder einem Gemisch solcher Monomere, mit

B) einer Initiatorverbindung $R^1R^2R^3C$-X, die ein oder mehrere radikalisch abstrahierbare oder übertragbare Atome oder Atomgruppen X enthält, worin $R^1$ entweder X oder einen linearen oder verzweigten Alkylrest, der entweder mit X oder mit $Y^1$ und ggf. weiteren Resten substituiert ist, darstellt und $R^2$, $R^3$ unabhängig voneinander Wasserstoff oder ggf. substituierte, lineare oder verzweigte aliphatische oder aromatische Kohlenwasserstoffreste oder elektronenziehende Substituenten wie z.B. COOR, CN, $NO_2$, COCl, CONHR, $CONR_2$ oder COR darstellen,

C) einer Übergangsmetallverbindung $M_pZ_q$, die aus einem Kation eines Metalls M aus der Gruppe Cu, Fe, Ru, Cr, Mo, Wo, Mn, Rh, Re, Co, Ni, V, Zn, Au, Ag oder Sm, wobei M in der Übergangsmetallverbindung in verschiedenen Oxidationsstufen auftreten und an einem reversiblen Redoxprozeß teilnehmen kann, und einem Anion Z aus der Gruppe Halogenid, Hydroxid, $C_1$-$C_6$-Alkoxy, $SO_4^{2-}$, $PO_4^{3-}$, $R^4PO_4^{2-}$, $R^4R^5PO_4^-$, $R^3R^4R^5P$-, $CF_3COO$-, $PF_6^-$, $CH_3SO_3^-$, $ArSO_3^-$, $CN^-$ oder $R^4COO^-$, wobei $R^4$, $R^5$ unabhängig voneinander Wasserstoff oder einen ggf. aryl- oder halogensubstituierten Alkylrest darstellen, und wobei sich p und q aus den Wertigkeiten von M und Z in der Übergangsmetallverbindung ergeben, aufgebaut ist, und

D) einem ein- oder mehrzähnigen Komplexliganden L, der ein oder mehrere Stickstoff-, Sauerstoff-, Schwefel- oder Phosphoratome enthält und mit mindestens einem Kation des Metalls M Komplexe eingehen kann, dadurch gekennzeichnet, daß die Komponenten A) bis D) in Gegenwart von

E) einer Verbindung $R^6R^7C{=}CR^8(R^9\text{-}Y^2)$, die mindestens eine olefinische Doppelbindung und mindestens eine mit Isocyanaten, Alkoholen, Carbonsäuren oder Epoxiden reaktionsfähige funktionelle Gruppe $Y^2$ enthält, wobei zwischen der Doppelbindung und $Y^2$ ein Kohlenstoffrest $R^9$ vorhanden sein muß, der eine lineare oder verzweigte, ggf. substituierte Alkylkette mit einer Mindestlänge von 1 Methylengruppe darstellt, und wobei $R^6$, $R^7$ und $R^8$ unabhängig voneinander Wasserstoff oder einen ggf. aryl- oder halogensubstituierten Alkylrest darstellen und wie sie in Anspruch 1 definiert sind.

in einer lebenden radikalischen Polymerisation zum Telechel $Y^1$-Q-$Y^2$ umgesetzt werden.

Bei den radikalisch polymerisierbaren ethylenisch ungesättigten Monomeren A können prinzipiell alle bekannten radikalisch polymerisierbaren Olefine und substituierten Olefine eingesetzt werden. Als Substituenten kommen z. B. in Frage : Wasserstoff (H), lineare oder verzweigte Alkylreste R mit 1 - 20 Kohlenstoffatomen, die gegebenfalls auch weitere Substituenten tragen können, α,β-ungesättigte lineare oder verzweigte Alkenyl- oder Alkinylreste, die gegebenfalls auch weitere Substituenten tragen können, Cycloalkylreste, die auch Heteroatome wie z.B. O, N oder S im Ring und gegebenenfalls weitere Substituenten tragen können, gegebenenfalls substituierte Aryl- oder Heteroarylreste, Halogen, CN, $CF_3$, COOR, CONHR, $CONR_2$, COR (mit R = $C_1$-$C_{20}$).

Die radikalisch polymerisierbare Doppelbindung der ethylenisch ungesättigten Monomeren A kann auch Teil eines Rings sein, wie z.B. bei cyclischen Olefinen oder olefinisch ungesättigten Anhydriden oder Imiden.

Bevorzugt eingesetzte Monomere zur Herstellung von Q umfassen: (Meth)acrylsäureester von $C_1$-$C_{20}$-Alkoholen, Acrylnitril, Cyanoacrylsäureester von $C_1$-$C_{20}$-Alkoholen, Maleinsäurediester von $C_1$-$C_6$-Alkoholen, Maleinsäureanhydrid, Vinylpyridine, Vinyl(alkylpyrrole), Vinyloxazole, Vinyloxazoline, Vinylthiazole, Vinylimidazole, Vinylpyrimidine, Vinylketone, Styrol oder Styrolderivate, die in α-Stellung einen $C_1$-$C_6$-Alkylrest oder Halogen tragen und bis zu 3 weitere Substituenten am aromatischen Ring tragen.

Besonders bevorzugt werden Butylacrylat, 2-Ethylhexylacrylat, Methylmethacrylat, Butylmethacrylat, Cyclohexylmethacrylat, Isobornylmethacrylat, Maleinsäureanhydrid oder Styrol eingesetzt.

Bei der Initiatorverbindung B handelt es sich um Substanzen der Formel $R^1R^2R^3X$, die ein oder mehrere radikalisch abstrahierbare oder übertragbare Atome oder Atomgruppen X enthält, worin $R^1$ entweder X oder einen linearen oder verzweigten $C_1$-$C_{20}$-Alkylrest, der entweder mit X oder mit $Y^1$ und ggf. weiteren Resten substituiert ist, darstellt und $R^2$, $R^3$ unabhängig voneinander Wasserstoff oder ggf. substituierte, lineare oder verzweigte $C_1$-$C_{20}$ aliphatische oder $C_6$-$C_{24}$ aromatische Kohlenwasserstoffreste oder elektronenziehende Substituenten wie z.B. COOR, CN, $NO_2$, COCl, CONHR, $CONR_2$ oder COR (mit R = $C_1$-$C_{20}$) darstellen. Die Verbindung B kann entweder B1) eine funktionelle Gruppe Y' enthalten oder B2) frei von $Y^1$ sein, dafür aber in den Substituenten eine zusätzliche Gruppe X (d.h. insgesamt 2 Gruppen X pro Initiatormolekül) enthalten.

In den Initiatorverbindungen B1 läßt sich der Rest $R^1$ durch die Formel $Y^1$-$R^{10}$ beschreiben, worin $R^{10}$ einen linearen oder verzweigten, ggf. auch mit aromatischen Resten substituierten Kohlenwasserstoffrest, der ggf. auch Ether-, Ester-, Amid-, Urethan- oder Harnstoffgruppen enthalten kann, mit 1 - 10 Kohlenstoffatomen darstellt, der zusätzlich auch lineare polymere Blöcke wie z.B. Polyetherblöcke, Polyesterblöcke oder Polyacrylatblöcke enthalten kann, und $Y^1$ eine funktionelle Gruppe, ausgewählt aus -OH, -Cl, -COOH, -COOR, -CN, -$NO_2$, -$SO_3$H, -COCl, -CONHR, -$CONR_2$, -OR, -OP(=O)R, -OP(=O)(OR), -OP(=O)$(OR)_2$ oder -C(=O)R darstellt, und R, $R^1$, $R^2$ und $R^3$ die oben beschriebene Bedeutung haben.

Bevorzugt werden als Komponente B 1 Verbindungen der Formeln

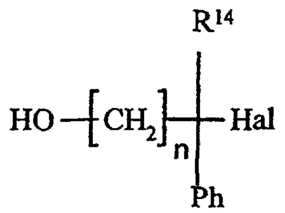

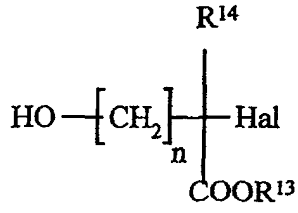

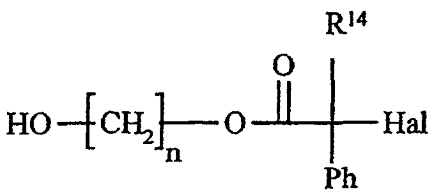

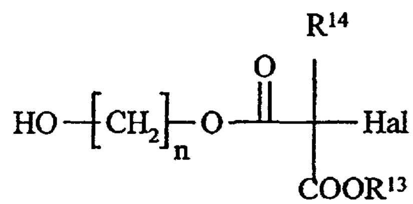

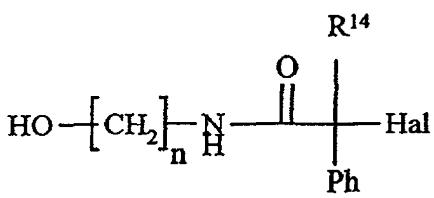

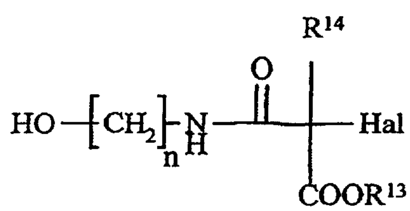

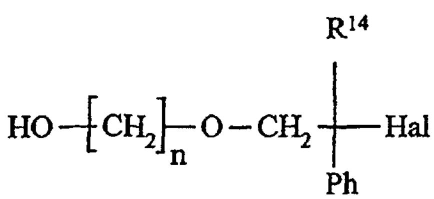

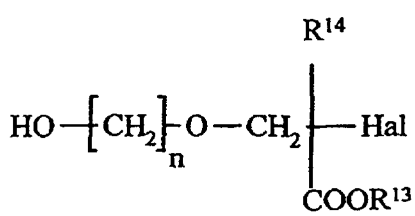

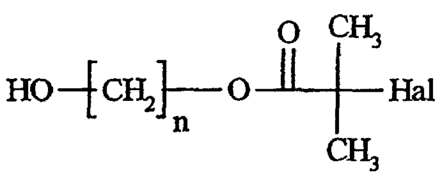

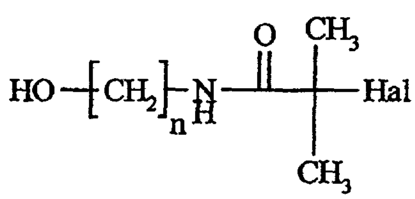

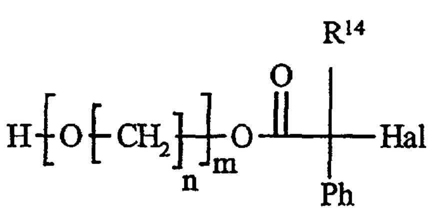

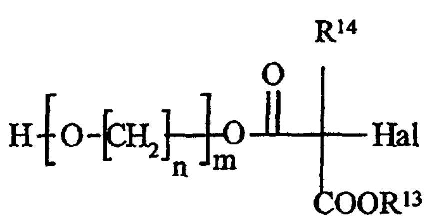

eingesetzt, wobei Hal = Cl oder Br, $R^{13}$ = $C_1$-$C_6$-Alkyl, $R^{14}$ = H oder $CH_3$, n = 1 - 10 und m = 1 - 225 bedeuten.

In den Initiatorverbindungen B2 kann der Rest $R^1$ gleich X sein oder durch die Formel X-$CR^{10}R^{11}R^{12}$ beschrieben werden, worin $R^2$, $R^3$ und $R^{10}$ die oben angegebene Bedeutung haben und $R^{11}$ und $R^{12}$ unabhängig voneinander Wasserstoff oder ggf. substituierte, lineare oder verzweigte aliphatische oder aromatische Kohlenwasserstoffreste darstellen.

Bevorzugt werden als Komponente B2 Verbindungen der Formeln

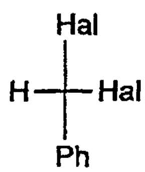
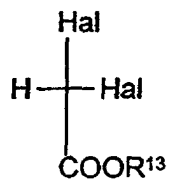
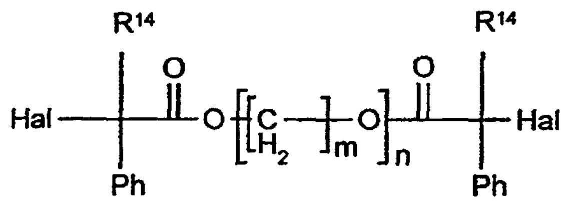

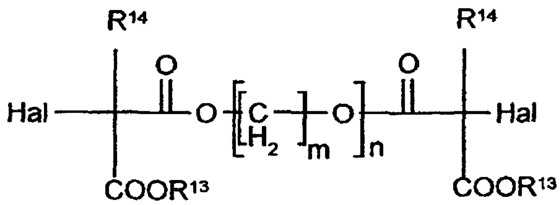
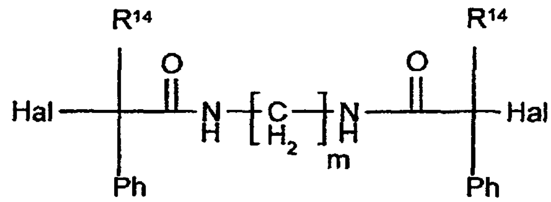

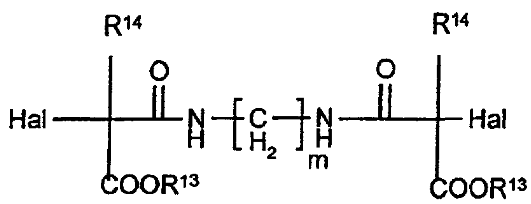

eingesetzt, wobei Hal = Cl oder Br, $R^{13}$ = $C_1$-$C_6$-Alkyl, $R^{14}$ = H oder $CH_3$ , n = 1 - 225 und m = 2 - 6 bedeuten.

Bei der Übergangsmetallverbindung C handelt es sich um Substanzen der Formel $M_pZ_q$, die aus einem Kation eines Metalls M aus der Gruppe Cu, Fe, Ru, Cr, Mo, Wo, Mn, Rh, Re, Co, Ni, V, Zn, Au, Ag oder Sm, wobei M in der Übergangsmetallverbindung in verschiedenen Oxidationsstufen auftreten und an einem reversiblen Redoxprozeß teilnehmen kann, und einem Anion Z aus der Gruppe Halogenid, Hydroxid, $C_1$-$C_6$-Alkoxy, $SO_4^{2-}$, $PO_4^{3-}$, $R^4PO_4^{2-}$, $R^4R^5PO_4^-$, $R^3R^4R^5P$-, $CF_3COO$-, $PF_6^-$, $CH_3SO_3^-$, $ArSO_3^-$, $CN^-$ oder $R^4COO^-$, wobei $R^4$, $R^5$ unabhängig voneinander Wasserstoff oder einen ggf. $C_6$-$C_{24}$-aryl- oder halogensubstituierten (Cl, Br) · Alkylrest darstellen, und wobei p und q für die Zahl 1, 2, 3, 4 oder 5 stehen und sich aus den Wertigkeiten von M und Z in der Übergangsmetallverbindung ergeben, aufgebaut sind. Bevorzugt werden als Komponente C CuCl, Gemische aus CuCl und $CuCl_2$, CuBr oder Gemische aus CuBr und $CuBr_2$ eingesetzt.

Üblicherweise entspricht das Anion Z der Übergangsmetallverbindung der abstrahierbaren Gruppe X des Initiators. Z und X können aber auch verschieden sein.

Bei der Komponente D handelt es sich um einen oder mehrere Komplexliganden L, die ein- oder mehrzähnig sein können, ein oder mehrere Stickstoff-, Sauerstoff-, Phosphor- oder Schwefelatome enthalten und mit mindestens einem Kation des Metalls M Komplexe eingehen können. Beispiele für solche Liganden sind Diamine, Diamide, Aminoalkohole, Diole, Hydroxycarbonsäureester, Aminocarbonsäureester, Bipyridine, Bipyrrole, Phenanthroline, Kryptanden, Kronenether oder Porphyrine. Auch Liganden, die das Zentralatom (z.B. über π-Bindungen) komplexieren, aromatische Verbindungen, (Poly)olefine- oder -alkine, sowie Cyclopentadienylverbindungen können geeignet sein. Bevorzugt werden als Komponente D jedoch Verbindungen der Formel

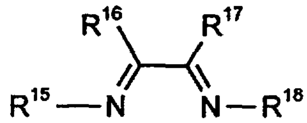

eingesetzt,
wobei $R^{15}$ bis $R^{18}$ unabhängig voneinander Wasserstoff oder $C_1$-$C_{20}$ aliphatische oder $C_6$-$C_{24}$ aromatische Kohlenwasserstoffreste darstellen, und $R^{15}$ bis $R^{18}$ ggf. auch miteinander verknüpft sein können und so einen stickstoffhaltigen ungesättigten, ggf. aromatischen Ring bilden, und wobei die Komponente D auch über einen odere mehrere der Reste $R^{15}$ bis $R^{18}$ an ein Polymer angebunden oder in eine Polymerkette eingebaut sein kann.

Erfindungswesentlich führt man die Polymerisation in Gegenwart eines Funktionalisierungsreagenzes E durch. Hierbei handelt es sich um eine Verbindung der Formel $R^6R^7C{=}CR^8(R^9\text{-}Y^2)$, die mindestens eine olefinische Doppelbindung und mindestens eine mit Isocyanaten, Alkoholen, Carbonsäuren oder Epoxiden reaktionsfähige funktionelle Gruppe $Y^2$ enthält, wobei zwischen der Doppelbindung und $Y^2$ ein Kohlenstoffrest $R^9$ vorhanden sein muß, der eine lineare oder verzweigte, ggf. substituierte $C_1$-$C_{20}$ Alkylkette mit einer Mindestlänge von 1 Methylengruppe darstellt, und wobei $R^6$, $R^7$ und $R^8$ unabhängig voneinander Wasserstoff oder einen ggf. aryl- oder halogensubstituierten Alkylrest darstellen. In manchen Fällen, aber nicht bevorzugt, kann auch ein Gemisch solcher Verbindungen eingesetzt werden.
Die Komponente E ist auszuwählen aus Verbindungen der Gruppe

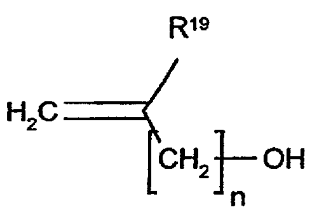
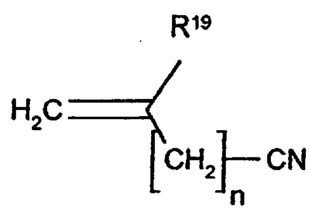
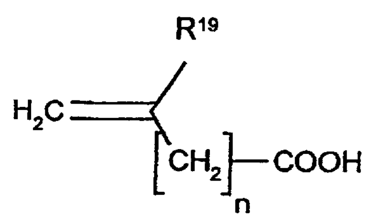

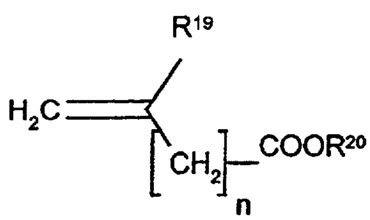
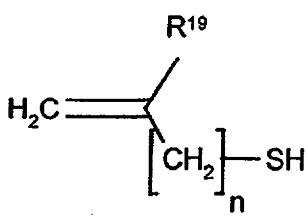
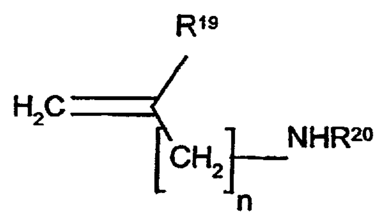

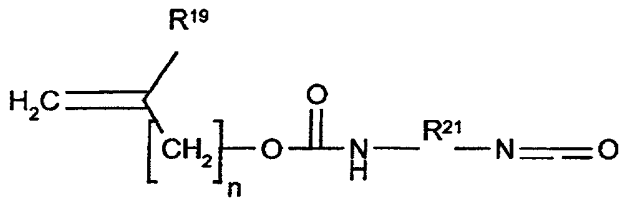

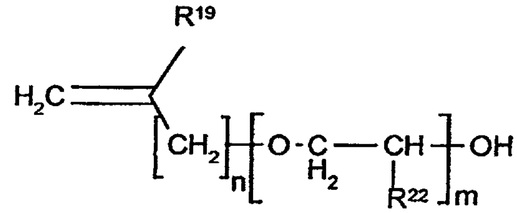

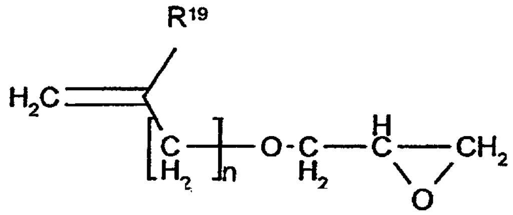

aus, wobei $R^{19}$ Wasserstoff oder eine lineare oder verzweigte $C_1$-$C_6$-Alkylkette und $R^{20}$ und $R^{21}$ beliebige Kohlenwasserstoffreste mit 1 bis 20 C-Atomen darstellen, $R^{22}$ Wasserstoff oder ein $C_1$-$C_{20}$-Alkylrest, bevorzugt Methyl ist, n = 1 - 4 und m = 1 - 10 sein kann. Besonders bevorzugt ist die Verwendung von 2-Propen-1-ol, 3-Buten-1-ol, 4-Penten-1-ol, 5-Hexen-1-ol oder ihrer durch Addition von 1 - 10 mol Propylenoxid an die OH-Gruppe erhaltenen propoxylierten Derivate.

Zur Herstellung der gewünschten Telechele nach dem erfindungsgemäßen Verfahren müssen die Komponenten A bis E in bestimmten molaren Verhältnissen in System vorliegen. Der Komplexligand D sollte zur Übergangsmetallverbindung C in einem molaren Verhältnis D:C von 1:1 bis 4:1, bevorzugt von 2,5:1 bis 3:1 vorliegen. Dabei muß die Initiatorverbindung B zur Übergangsmetallverbindung C in einem molaren Verhältnis von B:C von 0,3:1 bis 5:1, bevorzugt 1:1 bis 3:1 vorliegen. Die Komponente E setzt man in einer solchen Menge ein, die einem molaren Verhältnis von C=C-Doppelbindungen in Komponente E zu übertragbaren Atomen/Atomgruppen X in Komponente B von mindestens 1:1, bevorzugt mindestens 3:1 entspricht.

Die Menge der Komponente A (Monomere) zur Initiatorverbindung B richtet sich nach dem gewünschten Molekulargewicht bzw. Polymerisationsgrad des Telechels. Da es sich bei dem erfindungsgemäßen Verfahren um eine lebende Polymerisation handelt, die im Wesentlichen frei von Abbruch- oder Übertragungsreaktionen ist, und sich die Komponente E erst nach Verbrauch der Komponente A an die aktiven Kettenenden addiert, kann der Fachmann leicht die bei gegebener Ausgangsmonomerkonzentration $[A_0]$ erforderliche Initiatorkonzentration [B] berechnen, wenn er den Polymerisationsgrad $P_n$ erreichen will:

$$[B] = x_p \cdot [A_0]/P_n$$

wobei $x_p = ([A_0]-[A]) / [A_0]$ den Umsatz und [A] die aktuelle Monomerkonzentration beim Umsatz $x_p$ darstellt. Hieraus wird ersichtlich, daß sich nach dem erfindungsgemäßen Verfahren Telechele beliebigen Molekulargewichts herstellen lassen. Bevorzugt werden aber Molekulargewichte von $500 < M_n < 10.000$, besonders bevorzugt Molekulargewichte von $1000 < M_n < 5000$ eingestellt. Die erhaltenen Molekulargewichtsverteilungen sind recht eng und liegen im Bereich von $1,1 < M_w/M_n < 1,5$.

Die nach dem erfindungsgemäßen Verfahren hergestellten Telechele weisen Funktionalitäten ($Y^1 + Y^2$) von 1,6 bis 2,0; in den meisten Fällen jedoch von >1,8 bis 2,0; nie jedoch >2,0 auf. Eine der beiden Endgruppen kann auch in derivatisierter bzw. geschützter Form vorliegen, wobei sich dann Funktionalitäten von 0,8 bis 1,0; in den meisten Fällen von >0,9 bis 1,0 ergeben.

Die Umsetzung nach dem erfindungsgemäßen Verfahren kann bei Temperaturen zwischen Raumtemperatur und 180°C, bevorzugt zwischen 80° und 150°C, besonders bevorzugt zwischen 90° und 130°C durchgeführt werden. Sie kann lösemittelfrei (im Monomer bzw. Monomerengemisch) als auch in einem in der Lacktechnologie bekannten organischen Lösemittel durchgeführt werden. Sie kann an der Luft oder in einer Schutzgasatmosphäre durchgeführt werden; bevorzugt verwendet man eine Schutzgasatmosphäre (z.B. Stickstoff oder Argon).

Die erfindungsgemäßen Telechele $Y^1$-Q-$Y^2$ können als Bausteine in Blockcopolymeren eingesetzt werden, die z.B. in Kunststoffen, Fasern, Klebstoffen oder Bindemitteln oder Bindemittelkomponenten in Beschichtungsmitteln enthalten sind. Je nach chemischer Natur der Kunstoffe, Fasern, Klebstoffe oder Bindemittel sowie der Funktionalitäten der übrigen darin enthaltenen Bausteine können die funktionellen Gruppen $Y^1$, $Y^2$ des Telechels so gewählt werden,

daß die Aufbaureaktionen zum Blockcopolymer leicht und kontrolliert ablaufen. Über die Monomerzusammensetzung des Mittelblocks Q des Telechels können in die daraus hergestellten Blockcopolymere Eigenschaften wie z.B. Härte, Flexibilität, Hydrophobie, Hydrophilie, gezielte Unverträglichkeiten oder zusätzliche Funktionalitäten gezielt eingeführt werden.

Die erfindungsgemäßen Telechele können auch unmodifiziert je nach Funktionalität $Y^1$, $Y^2$ als Bindemittel, Bindemittelkomponente, Härter oder Härterkomponente in Beschichtungsmitteln und Klebstoffen eingesetzt werden.

## Beispiele

Alle Angaben in % beziehen sich auf das Gewicht.

## Beispiel 1

Herstellung eines erfindungsgemäßen Telechels

In einem Mehrhalskolben gibt man in einer Stickstoffatmosphäre leq. (49 Gew.Tle.) CuCl, 3 eq. (234 Gew. Tle.) Bipyridin, 18,8 eq. (939 Gew.Tle.) Methylmethacrylat, 20 eq. (582 Gew.Tle.) Allylalkohol und 2 eq. (246 Gew.Tle.) 4-Hydroxybutyl-2-chlor-2-phenylacetat zu 710 Gew.Tle. Butylacetat. Der Ansatz wird auf 130°C erhitzt und 60 Stunden bei dieser Temperatur gerührt. Nach dieser Zeit verdünnt man mit einer der Butylacetat-Menge entsprechenden Menge Dichlormethan und wäscht diese Lösung mit einer 5 %igen Salzsäurelösung. Die organische Phase wird nach der Phasentrennung im Vakuum eingeengt und das Produkt durch langsames Zulaufen dieser Lösung in Hexan ausgefällt. Nach Filtrieren und Trocknen erhält man Hydroxy-Telechel, das 1t. GPC ein Zahlenmittel des Molekulargewichts von 1900 und eine Polydispersität von 1,25 aufweist, in einer Ausbeute von 91%. Der Funktionalisierungsgrad ermittelt durch $^1$H-NMR-Spektroskopie und OH-Titration beträgt 1,8. Im MALDI-TOF-Spektrum können bishydroxyfunktionelle Oligomere als Hauptprodukt neben geringen Mengen monohydroxyfunktionelle Oligomere nachgewiesen werden; nichtfunktionelle Oligomere findet man nicht.

## Beispiele 2 - 6

Die in Tabelle 1 angegebenen Mischungen (alle Mengenangaben in Gewichtsteilen) der Komponenten werden zusammengegeben und analog Beispiel 1 zur Reaktion gebracht und aufgearbeitet:

Tabelle 1:

| Herstellung von erfindungsgemäßen Telechelen | | | | | | |
|---|---|---|---|---|---|---|
| Beispiel Nr. | 1 | 2 | 3 | 4 | 5 | 6 |
| CuCl | 49 | 25 | 25 | 20 | 9 | 30 |
| CuBr | | | | | | |
| Bipyridin | 234 | 117 | 117 | 94 | 43 | 140 |
| Methylmethacrylat | 939 | 500 | 196 | 400 | 187 | 100 |
| n-Butylacrylat | | | | 894 | | 128 |
| 2-Ethylhexylacrylat | | | | | | 184 |
| Allylalkohol | 582 | | | 135 | 171 | |
| Allyl-N-(4-methyl-phenyl)carbamat | | 175 | 112 | 153 | | 344 |
| 4-Hydroxybutyl-2-chlor-2-phenylacetat | 246 | 61 | | | | |
| N-(2-Hydroxyethyl)-2-chlor-2-phenylacetamid | | | 50 | | | |
| 2-Bromisobuttersäure-ethylester | | | | | | |
| $\alpha,\alpha$-Dichlortoluol | | | | 32 | 15 | 48 |
| Butylacetat | 710 | 440 | 440 | 440 | 180 | 440 |
| Reaktionszeit / [h] | 60 | 20 | 21 | 24 | 22 | 21 |
| Reaktionstemp. / [°C] | 130 | 130 | 130 | 130 | 130 | 130 |

Tabelle 1: (fortgesetzt)

| Herstellung von erfindungsgemäßen Telechelen | | | | | | |
|---|---|---|---|---|---|---|
| Beispiel Nr. | 1 | 2 | 3 | 4 | 5 | 6 |
| $M_n$ (GPC) | 1900 | 6300 | 2500 | 3000 | 3100 | 2000 |
| $M_w/M_n$ (GPC) | 1,25 | 1,14 | 1,39 | 1,43 | 1,25 | 1,43 |
| Funktionalität* | 1,8 | 1,9 | 1,97 | 1,95 | > 1.6 | > 1,8 |

* Erläuterungen zur Endgruppenfunktionalität, Bsp. 1 - 6:
Bsp. 1 : OH-funktioneller Initiator + Endcapping mit Allylalkohol
Bsp.2, 3: OH-funktioneller Initiator + Endcapping mit Phenylurethanderivat des Allylalkohols
Bsp.4, 6: doppeltes Endcapping mit Phenylurethanderivat des Allylalkohols
Bsp. 5 : doppeltes Endcapping mit Allylalkohol

## Patentansprüche

**1.** Verfahren zur Herstellung von oligomeren und polymeren Telechelen der Formel

$$Y^1\text{-}Q\text{-}Y^2,$$

wobei Q einen oligomeren, gegebenenfalls substituierten Kohlenwasserstoffrest mit einem Molekulargewicht 300 < Q < 10 000 der Formel

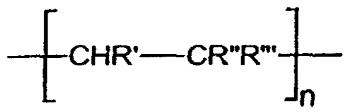

darstellt, worin n eine ganze Zahl im Bereich $3 \leq n \leq 50$ ist und R', R'', R''' unabhängig voneinander H, $C_1$-$C_{20}$-(Cyclo) alkyl, $C_6$-$C_{24}$-Aryl, Halogen, CN, $C_1$-$C_{20}$-Alkylester oder -amid, $C_6$-$C_{24}$-Arylester oder -amid sein können, wobei R', R'', R''' auch weitere funktionelle Gruppen wie z.B. Aldehyd-, Keto- oder Ethergruppen enthalten können und R' und R'' auch Bestandteile eines Rings, z.B. bei einem cyclischen Anhydrid, cyclischen Imid oder cyclischen Alkan sein können
und die funktionellen Gruppen $Y^1$, $Y^2$ mit Isocyanaten, Alkoholen, Carbonsäuren oder Epoxiden reaktionsfähige funktionelle Gruppen darstellen und gleich oder verschieden sein können,
durch Polymerisation von:

A) radikalisch polymerisierbaren, ethylenisch ungesättigten Monomeren der Formel

$$R'HC{=}CR''R''' ,$$

worin R', R'', R''' die oben angegebene Bedeutung haben und keine der funktionellen Gruppen $Y^1$, $Y^2$ beinhalten,
oder einem Gemisch solcher Monomere, mit

B) einer Initiatorverbindung $R^1R^2R^3C$-X, die ein oder mehrere radikalisch abstrahierbare oder übertragbare Atome oder Atomgruppen X enthält, worin $R^1$ entweder X oder einen linearen oder verzweigten Alkylrest, der entweder mit X oder mit $Y^1$ und ggf. weiteren Resten substituiert ist, darstellt und $R^2$, $R^3$ unabhängig voneinander Wasserstoff oder ggf. substituierte, lineare oder verzweigte aliphatische oder aromatische Kohlenwasserstoffreste oder elektronenziehende Substituenten wie z.B. COOR, CN, $NO_2$, COCl, CONHR, $CONR_2$ oder COR darstellen,

C) einer Übergangsmetallverbindung $M_pZ_q$, die aus einem Kation eines Metalls M aus der Gruppe Cu, Fe, Ru, Cr, Mo, Wo, Mn, Rh, Re, Co, Ni, V, Zn, Au, Ag oder Sm, wobei M in der Übergangsmetallverbindung in

verschiedenen Oxidationsstufen auftreten und an einem reversiblen Redoxprozeß teilnehmen kann, und einem Anion Z aus der Gruppe Halogenid, Hydroxid, $C_1$-$C_6$-Alkoxy, $SO_4^{2-}$, $PO_4^{3-}$, $R^4PO_4^{2-}$, $R^4R^5PO_4^-$, $R^3R^4R^5P$-, $CF_3COO$-, $PF_6^-$, $CH_3SO_3^-$, $ArSO_3^-$, $CN^-$ oder $R^4COO^-$, wobei $R^4$, $R^5$ unabhängig voneinander Wasserstoff oder einen ggf. aryl- oder halogensubstituierten Alkylrest darstellen, und wobei sich p und q aus den Wertigkeiten von M und Z in der Übergangsmetallverbindung ergeben, aufgebaut ist, und

D) einem ein- oder mehrzähnigen Komplexliganden L, der ein oder mehrere Stickstoff-, Sauerstoff- Schwefel- oder Phosphoratome enthält und der mit mindestens einem Kation des Metalls M Komplexe eingehen kann, **dadurch gekennzeichnet, daß** die Komponenten A) - D) in Gegenwart

E) einer Verbindung ausgewählt aus der Gruppe

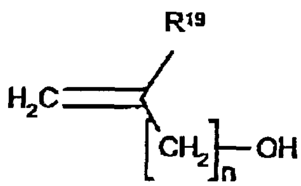
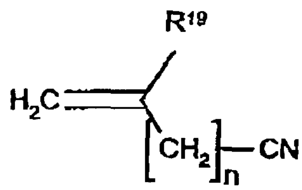
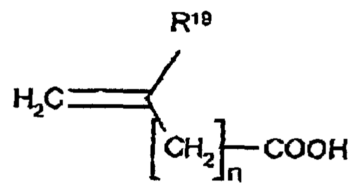
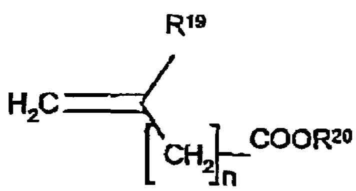
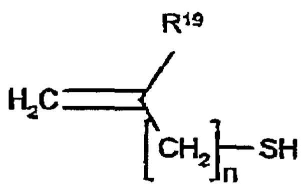
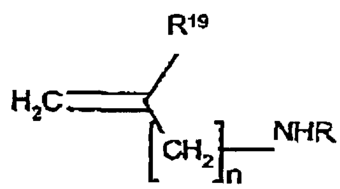
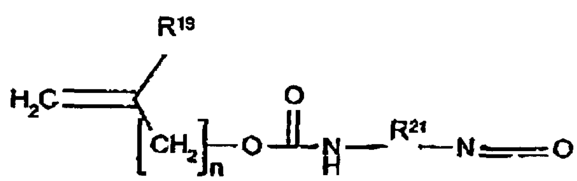
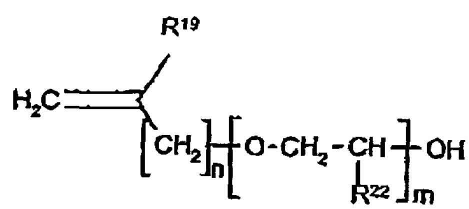
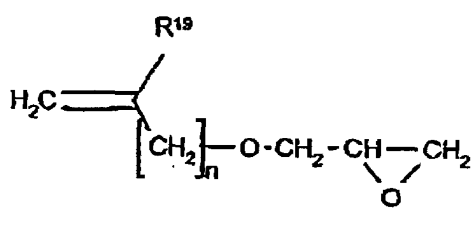

wobei $R^{19}$ Wasserstoff oder eine lineare oder verzweigte $C_1$-$C_6$-Alkylkette und $R^{20}$ und $R^{21}$ beliebige Kohlenwasserstoffreste darstellen, $R^{22}$ Wasserstoff oder ein Alkylrest, bevorzugt Methyl ist, n = 1 - 4 und m = 1 - 10 ist, in einer lebenden radikalischen Polymerisation zum Telechel $Y^1$-Q-$Y^2$ umgesetzt werden.

**2.** Verfahren zur Herstellung von oligomeren oder polymeren Telechelen gemäß Anspruch 1, **dadurch gekennzeich-**

**net, daß** als Komponente B Verbindungen des Typs $R^1R^2R^3C$-X eingesetzt werden, wobei $R^1$ durch die Formel $Y^1$-$R^{10}$ beschrieben wird, worin $R^{10}$ einen linearen oder verzweigten, ggf. auch mit aromatischen Resten substituierten Kohlenwasserstoffrest, der ggf. auch Ether-, Ester-, Amid-, Urethan- oder Harnstoffgruppen enthalten kann, mit 1 bis 10 Kohlenstoffatomen darstellt, der zusätzlich auch lineare polymere Blöcke wie z.B. Polyetherblöcke, Polyesterblöcke oder Polyacrylatblöcke enthalten kann, $Y^1$ eine funktionelle Gruppe, ausgewählt aus -OH, -Cl, -COOH, -COOR, -CN, $-NO_2$, $-SO_3H$, -COCl, -CONHR, $-CONR_2$, -OR, -OP(=O)R, -OP(=O)(OR),-OP(=O)$(OR)_2$ oder -C(=O)R darstellt, und $R^2$, $R^3$ die oben beschriebene Bedeutung haben.

3. Verfahren zur Herstellung von oligomeren oder polymeren Telechelen gemäß den Ansprüchen 1 oder 2, **dadurch gekennzeichnet, daß** als Komponente B Verbindungen der Formeln

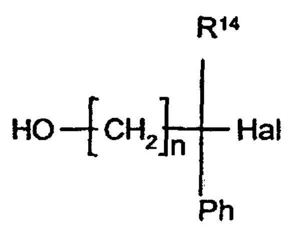

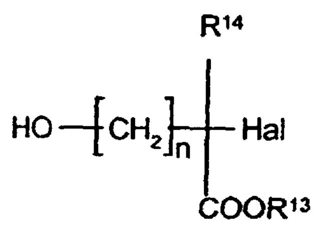

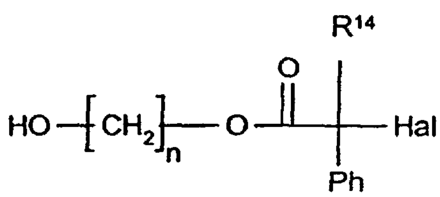

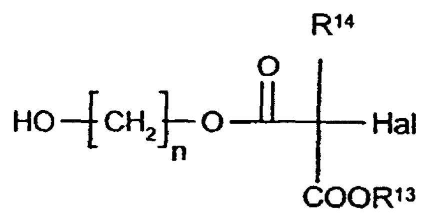

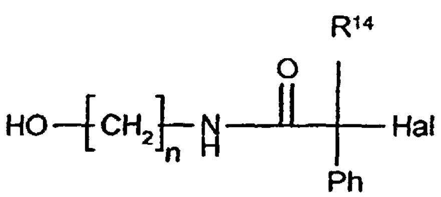

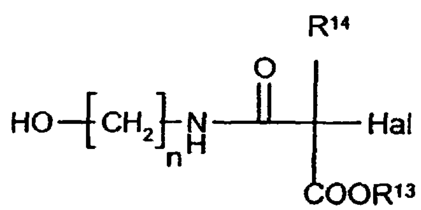

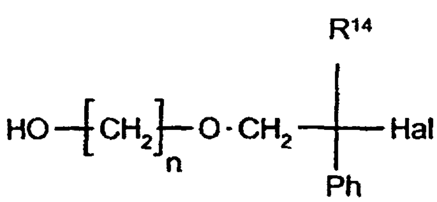

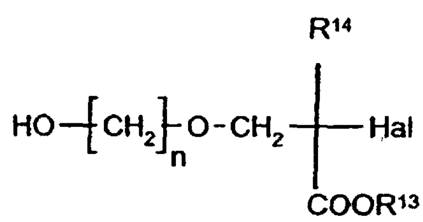

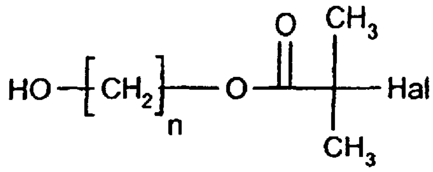

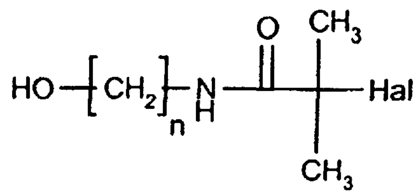

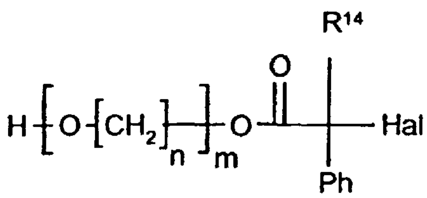

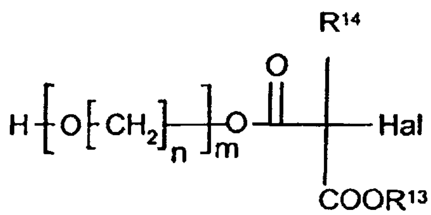

eingesetzt werden, wobei Hal = Cl oder Br, $R^{13}$ = $C_1$ - $C_6$-Alkyl, $R^{14}$ = H oder $CH_3$, n = 1 - 10 und m = 1 - 225 bedeuten.

4. Verfahren zur Herstellung von oligomeren oder polymeren Telechelen gemäß Anspruch 1, **dadurch gekennzeichnet, daß** als Komponente B Verbindungen des Typs $R^1R^2R^3C$-X eingesetzt werden, die frei von funktionellen Gruppen $Y^1$ sind, wobei $R^1$ gleich X ist oder durch die Formel X-$CR^{10}R^{11}R^{12}$ beschrieben wird, worin $R^2$, $R^3$ und $R^{10}$ die oben angegebene Bedeutung haben und $R^{11}$ und $R^{12}$ unabhängig voneinander Wasserstoff oder ggf. substituierte, lineare oder verzweigte aliphatische oder aromatische Kohlenwasserstoffreste darstellen.

5. Verfahren zur Herstellung von oligomeren oder polymeren Telechelen gemäß den Ansprüchen 1 und 4, **dadurch gekennzeichnet, daß** als Komponente B Verbindungen der Formeln

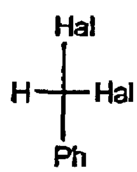

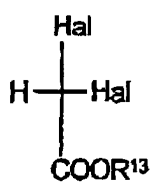

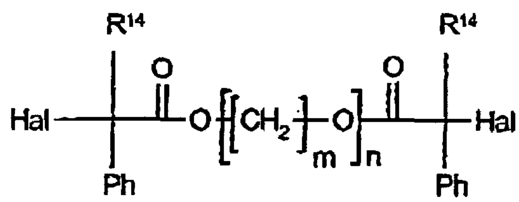

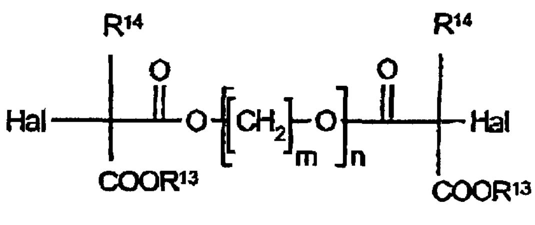

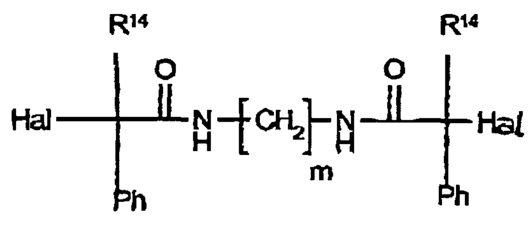

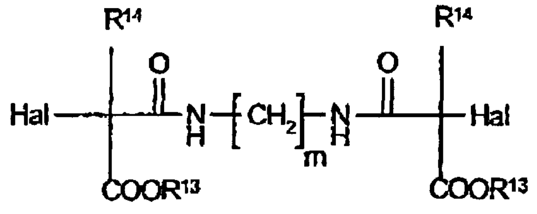

eingesetzt werden, wobei Hal = Cl oder Br, $R^{13} = C_1 - C_6$-Alkyl, $R^{14}$ = H oder $CH_3$, n = 1 - 225 und m = 2 - 6 bedeuten.

6. Verfahren zur Herstellung von oligomeren oder polymeren Telechelen gemäß Anspruch 1, **dadurch gekennzeichnet, daß** als Komponente A Butylacrylat, 2-Ethylhexylacrylat, Methylmethacrylat, Butylmethacrylat, Cyclohexylmethacrylat, Isobornylmethacrylat, Maleinsäureanhydrid oder Styrol sowie Gemische dieser Monomere eingesetzt werden.

7. Verfahren zur Herstellung von oligomeren oder polymeren Telechelen gemäß Anspruch 1, **dadurch gekennzeichnet, daß** als Komponente C CuCl, Gemische aus CuCl und $CuCl_2$, CuBr oder Gemische aus CuBr und $CuBr_2$ eingesetzt werden.

8. Verfahren zur Herstellung von oligomeren oder polymeren Telechelen gemäß Anspruch 1, **dadurch gekennzeichnet, daß** als Komponente D Verbindungen der Formel

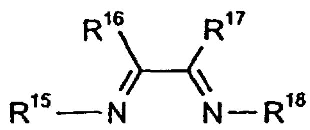

eingesetzt werden, wobei $R^{15}$ bis $R^{18}$ unabhängig voneinander Wasserstoff oder aliphatische oder aromatische Kohlenwasserstoffreste darstellen, und $R^{15}$ bis $R^{18}$ ggf. auch miteinander vernüpft sein können und so einen stickstoffhaltigen ungesättigten, ggf. aromatischen Ring bilden, und wobei die Komponente D auch über einen odere mehrere der Reste $R^{15}$ bis $R^{18}$ an ein Polymer angebunden oder in eine Polymerkette eingebaut sein kann.

9. Verfahren zur Herstellung von oligomeren oder polymeren Telechelen gemäß Anspruch 1, **dadurch gekennzeichnet, daß** als Komponente E eine Verbindung, ausgewählt aus der Gruppe 2-Propen-1-ol, 3-Buten-1-ol, 4-Penten-1-ol oder 5-Hexen-1-ol oder die entsprechenden, durch Addition von 1 bis 10 mol Propylenoxid an die OH-Gruppen erhaltenen propoxylierten Verbindungen eingesetzt wird.

10. Verfahren zur Herstellung von oligomeren oder polymeren Telechelen gemäß Anspruch 1, **dadurch gekennzeichnet, daß** man den Komplexliganden D in einem molaren Verhältnis von D : C = 2,5 : 1 bis 3 : 1 zur Übergangsmetallverbindung C und die Initiatorverbindung B in einem molaren Verhältnis B : C = 1:1 bis 3:1 zur Übergangsmetallverbindung C einsetzt, und die Komponente E in einer solchen Menge einsetzt, die einem molaren Verhältnis von C=C-Doppelbindungen in Komponente E zu übertragbaren Atomen/Atomgruppen X in Komponente B von mindestens 3 : 1 entspricht.

11. Gemäß den Ansprüchen 1 bis 10 erhaltene Telechele.

12. Gemäß den Ansprüchen 1 bis 10 erhaltene Telechele, **dadurch gekennzeichnet, daß** sie ein Zahlenmittel des Molekulargewichts zwischen 1000 und 5000 aufweisen.

13. Verwendung der Telechele gemäß Anspruch 11 oder 12 als Baustein für Kunststoffe, Klebstoffe oder Fasern sowie als Bindemittel, Bindemittelkomponente oder Baustein für Bindemittelkomponenten in Beschichtungsmitteln und Klebstoffen.

## Claims

1. A process for the production of oligomeric and polymeric telechelic substances of the formula

$$Y^1\text{-}Q\text{-}Y^2,$$

wherein Q represents an oligomeric, optionally substituted hydrocarbon residue with a molecular weight 300 < Q

< 10000 of the formula

$$-\left[CHR'-CR''R'''\right]_n-$$

in which n is an integer in the range $3 \leq n \leq 500$ and R', R'', R''' may mutually independently be H, $C_1$-$C_{20}$ (cyclo) alkyl, $C_6$-$C_{24}$ aryl, halogen, CN, $C_1$-$C_{20}$ alkyl ester or alkylamide, $C_6$-$C_{24}$ aryl ester or arylamide, wherein R', R'', R''' may also contain further functional groups such as, for example, aldehyde, keto or ether groups and R' and R'' may also be constituents of a ring, for example in a cyclic anhydride, cyclic imide or cyclic alkane
and the functional groups $Y^1$, $Y^2$ represent functional groups which are reactive with isocyanates, alcohols, carboxylic acids or epoxides and may be identical or different,
by polymerisation of:

A) free-radically polymerisable, ethylenically unsaturated monomers of the formula

$$R'HC=CR''R''',$$

in which R', R'', R''' have the above-stated meaning and contain none of the functional groups $Y^1$, $Y^2$, or a mixture of such monomers with

B) an initiator compound $R^1R^2R^3C$-X, which contains one or more free-radically abstractable or transferable atoms or groups of atoms X, in which $R^1$ represents either X or a linear or branched alkyl residue which is substituted either with X or with $Y^1$ and optionally further residues, and $R^2$, $R^3$ mutually independently represent hydrogen or optionally substituted, linear or branched aliphatic or aromatic hydrocarbon residues or electron-attracting substituents such as for example COOR, CN, $NO_2$, COCl, CONHR, $CONR_2$ or COR,

C) a transition metal compound $M_pZ_q$, which is prepared from a cation of a metal M from the group comprising Cu, Fe, Ru, Cr, Mo, Wo, Mn, Rh, Re, Co, Ni, V, Zn, Au, Ag or Sm, wherein M may be present in the transition metal compound in different oxidation states and may participate in a reversible redox process, and an anion Z from the group comprising halide, hydroxide, $C_1$-$C_6$ alkoxy, $SO_4^{2-}$, $PO_4^{3-}$, $R^4PO_4^{2-}$, $R^4R^5PO_4^-$, $R^3R^4R^5P^-$, $CF_3COO^-$, $PF_6^-$, $CH_3SO_3^-$, $ArSO_3^-$, $CN^-$ or $R^4COO^-$, wherein $R^4$, $R^5$ mutually independently represent hydrogen or an optionally aryl- or halo-substituted alkyl residue, and wherein p and q are determined by the valencies of M and Z in the transition metal compound and

D) a mono- or polydentate complex ligand L, which contains one or more nitrogen, oxygen, sulfur or phosphorus atoms and may combine with at least one cation of the metal M to form complexes,
**characterised in that** components A) to D) are reacted in a living free-radical polymerisation reaction to yield the telechelic substance $Y^1$-Q-$Y^2$ in the presence of

E) a compound selected from the group

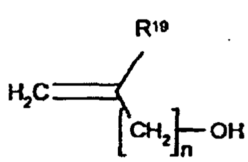 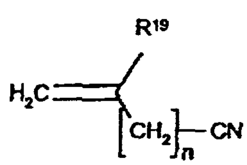 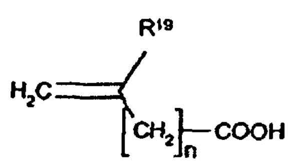

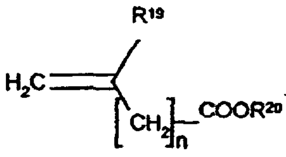
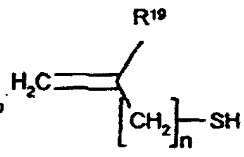
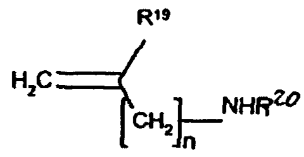

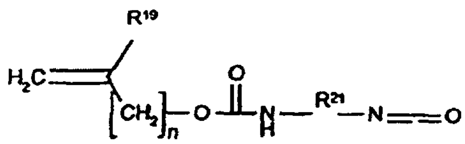
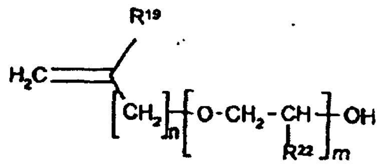
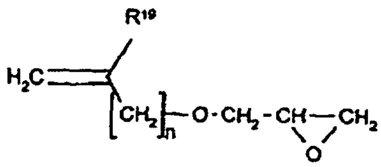

wherein $R^{19}$ represents hydrogen or a linear or branched $C_1$-$C_6$ alkyl chain and $R^{20}$ and $R^{21}$ represent any desired hydrocarbon residues, $R^{22}$ is hydrogen or an alkyl residue, preferably methyl, n is 1-4 and m is 1-10.

2. A process for the production of oligomeric or polymeric telechelic substances according to claim 1, **characterised in that** compounds of the type $R^1R^2R^3C$-X are used as component B, wherein $R^1$ may be described by the formula $Y^1$-$R^{10}$, in which $R^{10}$ represents a linear or branched hydrocarbon residue with 1-10 carbon atoms and optionally also substituted with aromatic residues, which hydrocarbon residue may optionally also contain ether, ester, amide, urethane or urea groups, and may additionally also contain linear polymeric blocks, such as for example polyether blocks, polyester blocks or polyacrylate blocks, and $Y^1$ represents a functional group selected from -OH, -Cl, -COOH, -COOR, -CN, $-NO_2$, $-SO_3H$, -COCl, -CONHR, $-CONR_2$, -OR, -OP(=O)R, -OP(=O)(OR), $-OP(=O)(OR)_2$ or -C(=O)R and $R^2$, $R^3$ have the above-stated meaning.

3. A process for the production of oligomeric or polymeric telechelic substances according to claims 1 or 2, **characterised in that** compounds of the formulae

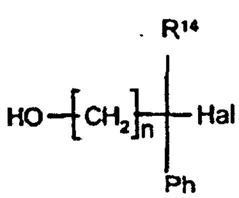
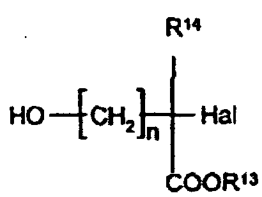

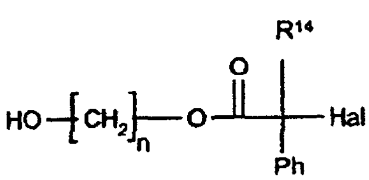
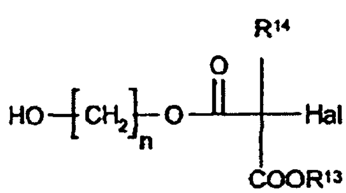

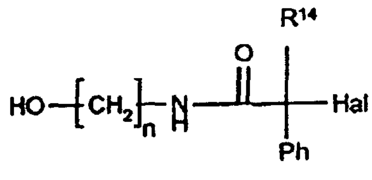 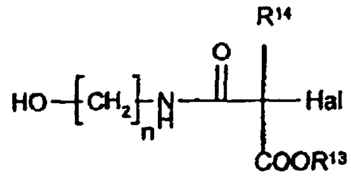

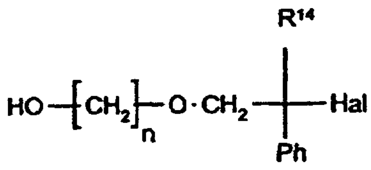 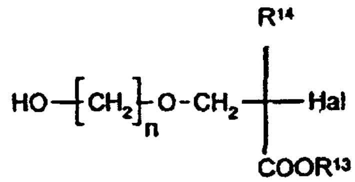

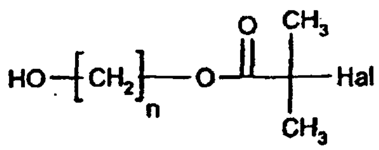 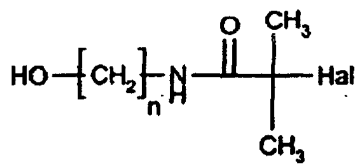

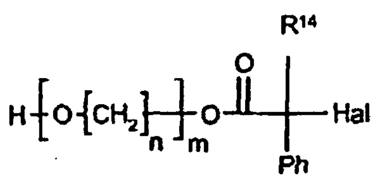 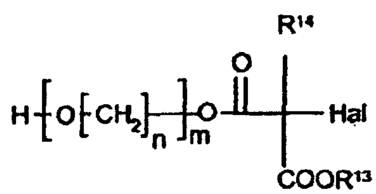

are used as component B, wherein Hal = Cl or Br, $R^{13}$ = $C_1$-$C_6$ alkyl, $R^{14}$ = H or $CH_3$, n = 1-10 and m = 1-225.

**4.** A process for the production of oligomeric or polymeric telechelic substances according to claim 1, **characterised in that** compounds of the type $R^1R^2R^3C$-X are used as component B, which contain no functional groups $Y^1$, wherein $R^1$ is identical to X or is described by the formula X-$CR^{10}R^{11}R^{12}$, in which $R^2$, $R^3$ and $R^{10}$ have the above-stated meaning and $R^{11}$ and $R^{12}$ mutually independently represent hydrogen or optionally substituted, linear or branched aliphatic or aromatic hydrocarbon residues.

**5.** A process for the production of oligomeric or polymeric telechelic substances according to claims 1 and 4, **characterised in that** compounds of the formulae

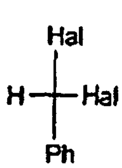 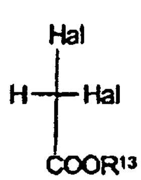 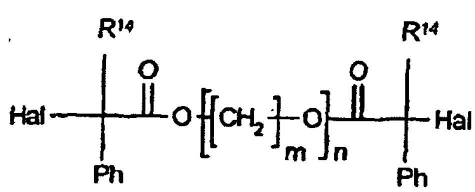

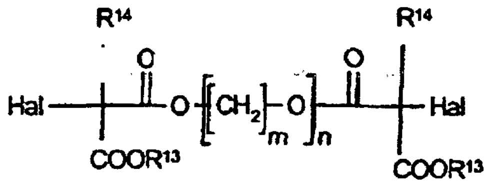

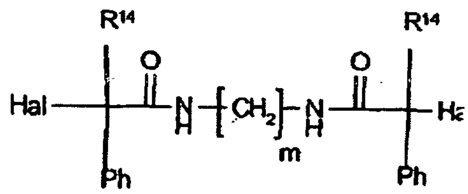

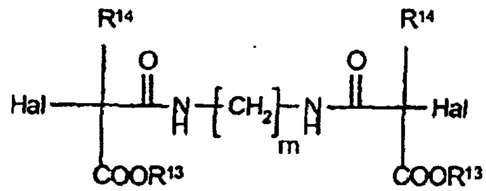

are used as component B, wherein Hal = Cl or Br, $R^{13}$ = $C_1$-$C_6$ alkyl, $R^{14}$ = H or $CH_3$, n = 1-225 and m = 2-6.

6. A process for the production of oligomeric or polymeric telechelic substances according to claim 1, **characterised in that** butyl acrylate, 2-ethylhexyl acrylate, methyl methacrylate, butyl methacrylate, cyclohexyl methacrylate, isobornyl methacrylate, maleic anhydride or styrene as well as mixtures of these monomers are used as component A.

7. A process for the production of oligomeric or polymeric telechelic substances according to claim 1, **characterised in that** CuCl, mixtures of CuCl and $CuCl_2$, CuBr or mixtures of CuBr and $CuBr_2$ are used as component C.

8. A process for the production of oligomeric or polymeric telechelic substances according to claim 1, **characterised in that** compounds of the formula

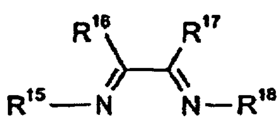

are used as component D, wherein $R^{15}$ to $R^{18}$ mutually independently represent hydrogen or $C_1$-$C_{20}$ aliphatic or $C_6$-$C_{24}$ aromatic hydrocarbon residues, and $R^{15}$ to $R^{18}$ may optionally also be linked together to form an unsaturated, optionally aromatic, ring containing nitrogen, and wherein component D may also be attached to a polymer or incorporated into a polymer chain by means of one or more of residues $R^{15}$ to $R^{18}$.

9. A process for the production of oligomeric or polymeric telechelic substances according to claim 1, **characterised in that** a compound selected from the group comprising 2-propen-1-ol, 3-buten-1-ol, 4-penten-1-ol, 5-hexen-1-ol or the corresponding propoxylated compounds obtained by addition of 1-10 mol of propylene oxide onto the OH groups is used as component E.

10. A process for the production of oligomeric or polymeric telechelic substances according to claim 1, **characterised in that** the complex ligand D is used relative to the transition metal compound C in a molar ratio of D:C of 2.5:1 to 3:1 and the initiator compound B is present relative to the transition metal compound C in a molar ratio of B:C of 1:1 to 3:1 and component E is used in a quantity corresponding to a molar ratio of C=C double bonds in component E to transferable atoms/groups of atoms X in component B of at least 3:1.

11. Telechelic substances obtained according to claims 1 to 10.

12. Telechelic substances obtained according to claims 1 to 10, **characterised in that** they have a number average

molecular weight of between 1000 and 5000.

**13.** Use of the telechelic substances according to claim 11 or 12 as structural unit for plastics, adhesives or fibres and as a binder, binder component or structural unit for binder components in coating compositions and adhesives.

## Revendications

**1.** Procédé de préparation de composés téléchéliques oligomères et polymères de formule

$$Y^1\text{-}Q\text{-}Y^2$$

dans laquelle Q représente un reste hydrocarboné oligomère, éventuellement substitué, ayant une masse molaire telle que 300 < Q < 10 000, de formule

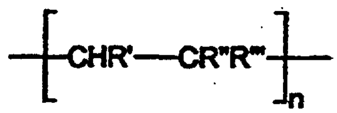

dans laquelle n représente un nombre entier tel que $3 \leq n \leq 500$ et R', R" et R"' peuvent être indépendamment les uns des autres H ou un reste (cyclo)alkyle en $C_1$-$C_{20}$, aryle en $C_6$-$C_{24}$, halogéno, CN, ester ou amide d'alkyle en $C_1$-$C_{20}$, ester ou amide d'aryle en $C_6$-$C_{24}$, R', R" et R"' pouvant aussi contenir d'autres groupes fonctionnels comme, par exemple, des groupes aldéhyde, céto ou éther, et R' et R" peuvent aussi être des constituants d'un cycle, par exemple dans le cas d'un anhydride cyclique, d'un imide cyclique ou d'un alcane cyclique;
et les groupes fonctionnels $Y^1$ et $Y^2$ représentent des groupes fonctionnels réactifs avec des isocyanates, des alcools, des acides carboxyliques ou des époxydes, et peuvent être identiques ou différents,
par polymérisation

A) de monomères à insaturation éthylénique polymérisables par voie radicalaire, de formule

$$R'HC = CR''R''',$$

dans laquelle R', R" et R"' ont la signification donnée ci-dessus et ne contiennent aucun des groupes fonctionnels $Y^1$, $Y^2$, ou d'un mélange de tels monomères, avec
B) un composé amorceur $R^1R^2R^3C$-X contenant un ou plusieurs atomes ou groupes d'atomes X pouvant être enlevés ou transférés par voie radicalaire, dans lequel $R^1$ représente X ou un reste alkyle linéaire ou ramifié substitué par X ou par $Y^1$ et éventuellement par d'autres restes, et $R^2$ et $R^3$, indépendamment l'un de l'autre, représentent l'hydrogène ou des restes hydrocarbonés aliphatiques linéaires ou ramifiés ou aromatiques, éventuellement substitués, ou des substituants attracteurs d'électrons comme, par exemple, COOR, CN, $NO_2$, COCl, CONHR, $CONR_2$ ou COR,
C) un composé de métal de transition $M_pZ_q$, constitué d'un cation d'un métal M du groupe de Cu, Fe, Ru, Cr, Mo, Wo, Mn, Rh, Re, Co, Ni, V, Zn, Au, Ag ou Sm, M pouvant apparaître à différents degrés d'oxydation dans le composé de métal de transition et pouvant participer à un procédé rédox réversible, et d'un anion Z du groupe constitué par un halogénure, un hydroxyde, un alcoxy en $C_1$-$C_4$, $SO_4^{2-}$, $PO_4^{3-}$, $R^4PO_4^{2-}$, $R^4R^5PO_4^-$, $R^3R^4R^5P^-$, $CF_3COO^-$, $PF_6^-$, $CH_3SO_3^-$, $ArSO_3^-$, $CN^-$ ou $R^4COO^-$, où $R^4$ et $R^5$ représentent, indépendamment l'un de l'autre, un atome d'hydrogène ou un reste alkyle éventuellement substitué par aryle ou halogéno, et p et q résultent des valences de M et Z dans le composé de métal de transition,
et
D) un ligand de complexes L mono- ou polycoordiné contenant un ou plusieurs atomes d'azote, d'oxygène, de soufre ou de phosphore et pouvant former des complexes avec au moins un cation du métal M,
**caractérisé en ce que** l'on fait réagir les constituants A) - D) en présence
E) d'un composé choisi dans le groupe constitué par

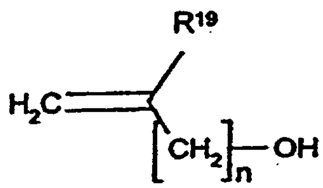

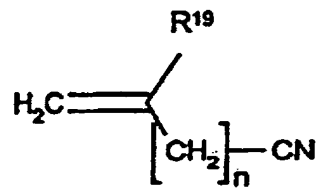

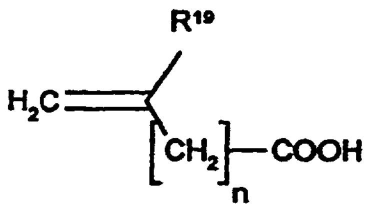

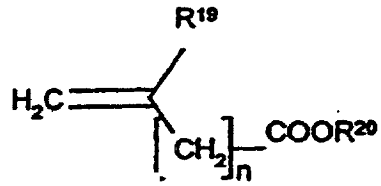

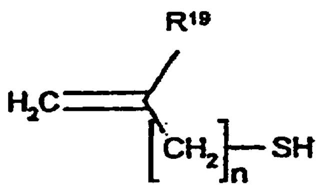

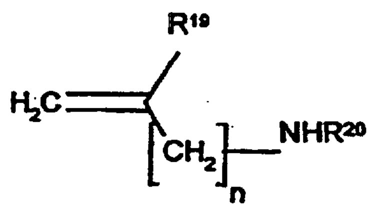

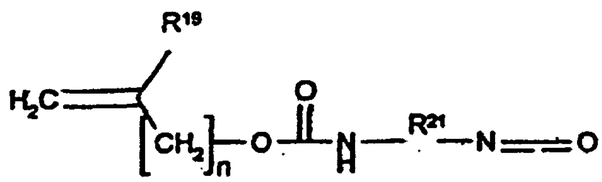

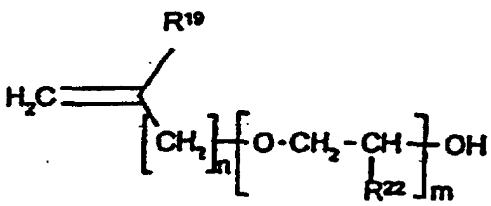

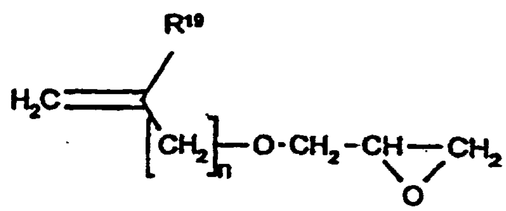

où $R^{19}$ est un atome d'hydrogène ou une chaîne alkyle en $C_1$-$C_6$ linéaire ou ramifiée et $R^{20}$ et $R^{21}$ représentent des restes hydrocarbonés quelconques, $R^{22}$ est un atome d'hydrogène ou un reste alkyle, de préférence méthyle, n = 1-4 et m = 1-10;
dans une polymérisation radicalaire vivante pour obtenir le composé téléchélique $Y^1$-Q-$Y^2$.

2. Procédé de préparation de composés téléchéliques oligomères ou polymères selon la revendication 1, **caractérisé en ce que** l'on utilise comme constituant B des composés du type $R^1R^2R^3C$-X dans lesquels $R^1$ est décrit par la formule $Y^1$-$R^{10}$ dans laquelle $R^{10}$ représente un reste hydrocarboné linéaire ou ramifié de 1 à 10 atomes de carbone, éventuellement substitué aussi par des restes aromatiques, qui peut aussi éventuellement contenir des groupes éther, ester, amide, uréthane ou urée, et qui peut en outre contenir aussi des blocs polymères linéaires comme, par exemple, des blocs de polyéther, des blocs de polyester ou des blocs de polyacrylate, $Y^1$ représente un groupe fonctionnel choisi parmi -OH, -Cl, -COOH, -COOR, -CN, $-NO_2$, $-SO_3H$, -COCl, -CONHR, $-CONR_2$, -OR,

-OP(=O)R, -OP(=O)(OR), $-OP(=O)(OR)_2$ ou -C(=O)R, et $R^2$ et $R^3$ ont la signification décrite ci-dessus.

3. Procédé de préparation de composés téléchéliques oligomères ou polymères selon les revendications 1 ou 2, **caractérisé en ce que** l'on utilise comme constituant B des composés de formule

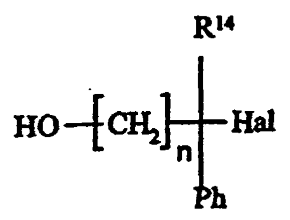
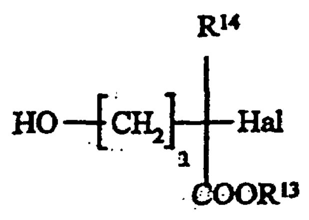

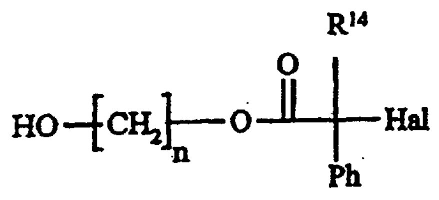
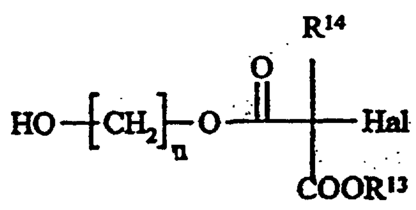

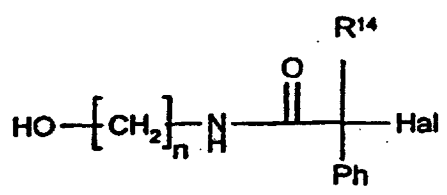
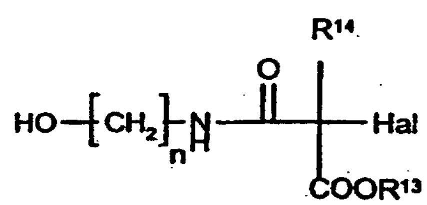

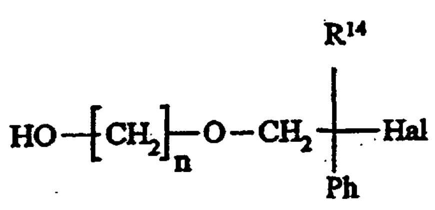
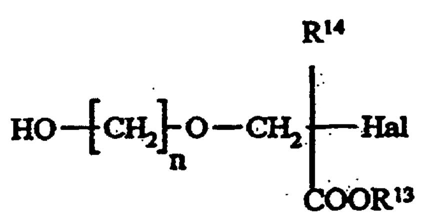

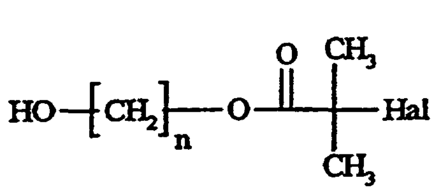
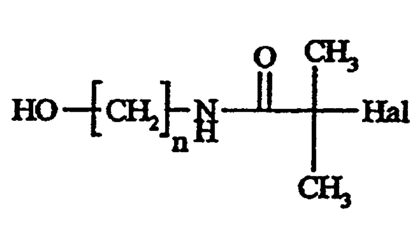

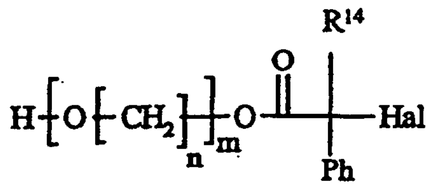

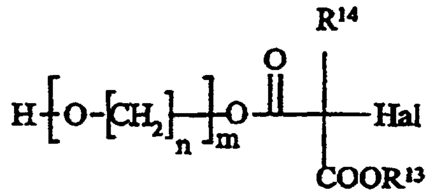

où Hal = Cl ou Br, $R^{13}$ représente un reste alkyle en $C_1$-$C_6$, $R^{14}$ = H ou $CH_3$, n = 1-10 et m = 1-225.

4. Procédé de préparation de composés téléchéliques oligomères ou polymères selon la revendication 1, **caractérisé en ce que** l'on utilise comme constituant B des composés de type $R^1R^2R^3C$-X ne contenant pas de groupes fonctionnels $Y^1$ et dans lesquels $R^1$ est X ou est décrit par la formule X-$CR^{10}R^{11}R^{12}$, où $R^2$, $R^3$ et $R^{10}$ ont la signification donnée ci-dessus et $R^{11}$ et $R^{12}$ représentent indépendamment l'un de l'autre un atome d'hydrogène ou un reste hydrocarboné aliphatique linéaire ou ramifié ou aromatique, éventuellement substitué.

5. Procédé de préparation de composés téléchéliques oligomères ou polymères selon les revendications 1 et 4, **caractérisé en ce que** l'on utilise comme constituant B des composés de formule

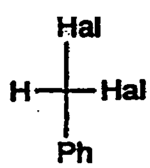

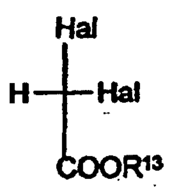

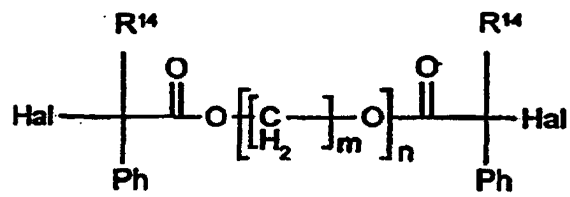

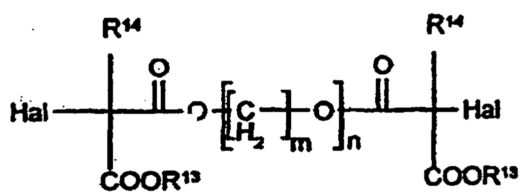

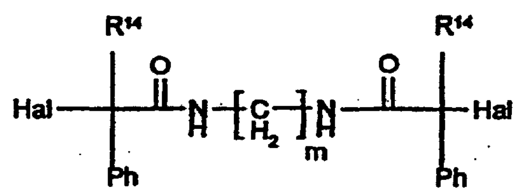

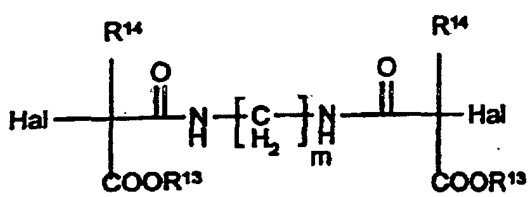

où Hal = Cl ou Br, $R^{13}$ représente un reste alkyle en $C_1$-$C_6$, $R^{14}$ = H ou $CH_3$, n = 1-225 et 3 = 2-6.

6. Procédé de préparation de composés téléchéliques oligomères ou polymères selon la revendication 1, **caractérisé en ce que** l'on utilise comme constituant A l'acrylate de butyle, l'acrylate de 2-éthylhexyle, le méthacrylate de méthyle, le méthacrylate de butyle, le méthacrylate de cyclohexyle, le méthacrylate d'isobornyle, l'anhydride maléique ou le styrène ou des mélanges de ces monomères.

7. Procédé de préparation de composés téléchéliques oligomères ou polymères selon la revendication 1, **caractérisé en ce que** l'on utilise comme constituant C CuCl, des mélanges de CuCl et $CuCl_2$, CuBr ou des mélanges de CuBr et $CuBr_2$.

**8.** Procédé de préparation de composés téléchéliques oligomères ou polymères selon la revendication 1, **caractérisé en ce que** l'on utilise comme constituant D des composés de formule

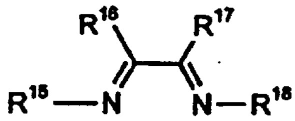

dans laquelle les $R^{15}$ à $R^{18}$ représentent indépendamment les uns des autres un atome d'hydrogène ou un reste hydrocarboné aliphatique ou aromatique, et les $R^{15}$ à $R^{18}$ peuvent éventuellement être liés entre eux pour former un cycle azoté insaturé, éventuellement aromatique, le constituant D pouvant aussi être lié à un polymère ou incorporé dans une chaîne de polymère par l'intermédiaire d'un ou plusieurs des restes $R^{15}$ à $R^{18}$.

**9.** Procédé de préparation de composés téléchéliques oligomères ou polymères selon la revendication 1, **caractérisé en ce que** l'on utilise comme constituant E un composé choisi dans le groupe constitué par le 2-propène-1-ol, le 3-butène-1-ol, le 4-pentène-1-ol, le 5-hexène-1-ol ou les dérivés propoxylés correspondants obtenus par addition de 1 à 10 mol d'oxyde de propylène sur le groupe OH.

**10.** Procédé de préparation de composés téléchéliques oligomères ou polymères selon la revendication 1, **caractérisé en ce que** l'on utilise le ligand de complexe D en un rapport molaire D:C par rapport au composé de métal de transition de 2,5:1 à 3:1, le composé amorceur B en un rapport molaire B:C par rapport au composé de métal de transition de 1:1 à 3:1, et le constituant E en une quantité correspondant à un rapport molaire de doubles liaisons C=C dans le constituant E aux atomes/groupes d'atomes X transférables du constituant B d'au moins 3:1.

**11.** Composés téléchéliques obtenus selon les revendications 1 à 10.

**12.** Composés téléchéliques obtenus selon les revendications 1 à 10, **caractérisés en ce qu'**ils ont une masse molaire moyenne en nombre comprise entre 1 000 et 5 000.

**13.** Utilisation des composés téléchéliques selon la revendication 11 ou 12 comme élément structural pour des matières plastiques, des colles ou des fibres, ainsi que comme liant, constituant de liant ou élément structural de constituants de liants dans des compositions de peinture et des colles.